(19) Europäisches Patentamt / European Patent Office / Office européen des brevets

(11) **EP 2 461 399 A1**

(12) **EUROPEAN PATENT APPLICATION**
published in accordance with Art. 153(4) EPC

(43) Date of publication:
**06.06.2012 Bulletin 2012/23**

(51) Int Cl.:
*H01M 4/58* (2010.01)     *H01M 4/36* (2006.01)

(21) Application number: **10804398.5**

(22) Date of filing: **27.07.2010**

(86) International application number:
**PCT/JP2010/062591**

(87) International publication number:
**WO 2011/013652 (03.02.2011 Gazette 2011/05)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **31.07.2009 JP 2009179161**

(71) Applicant: **Toda Kogyo Corporation
Hiroshima 739-0652 (JP)**

(72) Inventors:
• **KONO, Yoshiteru**
  **Otake-shi**
  **Hiroshima 739-0652 (JP)**
• **OGISU, Kenji**
  **Tokyo 105-6123 (JP)**
• **HAKATA, Toshiyuki**
  **Otake-shi**
  **Hiroshima 739-0652 (JP)**
• **MISHIMA, Yuji**
  **Otake-shi**
  **Hiroshima 739-0652 (JP)**

• **IWAMI, Katsuji**
  **Otake-shi**
  **Hiroshima 739-0652 (JP)**
• **YOKOTA, Masayuki**
  **Otake-shi**
  **Hiroshima 739-0652 (JP)**
• **YAMASAKI, Minoru**
  **Onoda-shi**
  **Yamaguchi 756-0847 (JP)**
• **KAJIYAMA, Akihisa**
  **Onoda-shi**
  **Yamaguchi 756-0847 (JP)**
• **SADAMURA, Hideaki**
  **Kitakyushu-shi**
  **Fukuoka 808-0021 (JP)**

(74) Representative: **Woods, Geoffrey Corlett et al
J A Kemp
14 South Square
Gray's Inn
London WC1R 5JJ (GB)**

(54) **POSITIVE ELECTRODE ACTIVE MATERIAL FOR NONAQUEOUS ELECTROLYTE SECONDARY BATTERY, AND NONAQUEOUS ELECTROLYTE SECONDARY BATTERY**

(57)     The present invention relates to a positive electrode active substance for non-aqueous electrolyte secondary batteries which comprises particles comprising a polyanionic compound and carbon, and a lipophilic treatment agent with which the respective particles are coated, wherein the positive electrode active substance has an average particle diameter of 1 to 50 μm. The positive electrode active substance preferably has an oil absorption of not more than 20 mL/100 g. The positive electrode active substance according to the present invention exhibits a good compatibility with a resin and is excellent in packing property and dispersibility in the resin, and therefore can provide an electrode sheet in which the positive electrode active substance is filled with a high packing density.

FIG. 1

100 μm

Printed by Jouve, 75001 PARIS (FR)

**Description**

TECHNICAL FIELD

The present invention relates to a polyanionic positive electrode (cathode) active substance which is excellent in packing density and dispersibility in a resin, and a non-aqueous electrolyte secondary battery using the positive electrode active substance.

BACKGROUND ART

With the recent rapid development of portable and cordless electronic equipments or apparatuses such as audiovisual (AV) devices and personal computers, there is an increasing demand for secondary batteries having a small size, a light weight and a high energy density as a power source for driving these electronic equipments or apparatuses. Also, in consideration of global environments, electric cars and hybrid cars have been recently developed and put into practice, so that there is an increasing demand for lithium ion secondary batteries having an excellent storage property which are usable in large-size applications. Under these circumstances, the lithium ion secondary batteries having advantages such as large charge and discharge capacities and a high safety have been noticed.

In recent years, as a positive electrode active substance useful for high energy-type lithium ion secondary batteries exhibiting a 3.5 V-grade voltage, a polyanionic compound has been noticed because this compound can provide a material having high charge and discharge capacities. However, the polyanionic compound tends to inherently exhibit a large electric resistance and a poor packing property when used in an electrode. Therefore, it has been required to improve properties of the polyanionic compound.

For example, olivine-type $LiFePO_4$ as the polyanionic compound comprises a rigid phosphoric acid tetrahedral skeleton, an oxygen octahedral skeleton having an iron ion contributing to oxidation and reduction reaction at a center thereof, and a lithium ion. The $LiFePO_4$ having such a crystal structure can stably retain its crystal structure even when subjected to repeated charge and discharge reactions, and has such an advantage that cycle characteristics of the $LiFePO_4$ tend to be hardly deteriorated. However, the $LiFePO_4$ has disadvantages such as one-dimensional moving path of the lithium ion and a less number of free electrons therein.

In addition, the polyanionic compound tends to have higher charge and discharge characteristics under high rate conditions as the particle diameter of primary particles of the polyanionic compound becomes smaller. Therefore, in order to obtain a polyanionic positive electrode active substance having excellent properties, it is required to control an aggregating condition of particles of the polyanionic compound such that the polyanionic compound is allowed to be present in the form of densely aggregated secondary particles and forms a suitable network with a low-electric resistance material such as carbon. However, a positive electrode formed of a composite material with carbon, etc., is very bulky, and has such a drawback that a packing density of lithium ions per unit volume of the positive electrode tends to become substantially lowered. Thus, in order to ensure adequate charge and discharge capacities per unit volume of the positive electrode, it has been required that the positive electrode active substance used therein forms a secondary aggregate having a high density which is obtained by bonding primary particles thereof having a small crystallite size together through a conductive assistant having a low electric resistance.

Conventionally, there have been proposed various improvements for enhancing an electric conductivity of the positive electrode active substance and a packing density of the active substance in an electrode. For example, there are known the technique of baking a reaction precursor obtained by dry-mixing and crushing a positive electrode active substance comprising a conductive carbon material to obtain a lithium iron phosphate-based composite oxide coated with the conductive carbon material (Patent Document 1); the technique of depositing a precursor material of a conductive carbon material on a surface of respective particles of a positive electrode active substance and subjecting the resulting coated particles to thermal decomposition to obtain a lithium iron phosphate-based composite oxide coated with the conductive carbon material (Patent Document 2); the technique of forming a composite material of $LiFePO_4$ and carbon into a spherical particle shape to enhance a packing density of the positive electrode active substance (Patent Document 3); or the like.

PRIOR DOCUMENTS

PATENT DOCUMENTS

Patent Document 1: Japanese Patent Application Laid-open (KOKAI) No. 2003-292308
Patent Document 2: Japanese Patent Application Laid-open (KOKAI) No. 2001-15111

Patent Document 3: Japanese Patent Application Laid-open (KOKAI) No. 2006-32241

SUMMARY OF THE INVENTION

PROBLEM TO BE SOLVED BY THE INVENTION

At present, it has been strongly required to provide a positive electrode active substance having excellent packing property and dispersibility in a resin which is usable as a positive electrode active substance for non-aqueous electrolyte secondary batteries. However, the positive electrode active substance capable of satisfying various these properties has not been obtained until now.

That is, in the techniques described in Patent Documents 1 to 3, the conventional positive electrode active substances have a poor compatibility with a binder resin because they are coated with the conductive carbon material, so that a coating material comprising these active substances has a high viscosity, thereby causing the problem that the positive electrode active substances tend to be deteriorated in packing property in an electrode.

Accordingly, an object of the present invention is to provide a positive electrode active substance which is excellent in packing property and dispersibility in a resin as well as can exhibit a good coatability onto a sheet.

MEANS FOR SOLVING THE PROBLEM

The above object of the present invention can be achieved by the following aspects of the present invention.

That is, in accordance with the present invention, there is provided a positive electrode active substance for non-aqueous electrolyte secondary batteries, comprising particles which comprise a polyanionic compound and carbon, which are respectively coated with a lipophilic treatment agent, and which has an average particle diameter of 1 to 50 $\mu$m (Invention 1).

Also, according to the present invention, there is provided the positive electrode active substance for non-aqueous electrolyte secondary batteries as described in the above Invention 1, wherein the polyanionic compound is a lithium compound represented by the following general formula:

$$Li_aM_bXO_c$$

wherein M is at least one transition metal element selected from the group consisting of Fe, Co and Mn and may be substituted with at least one other element selected from the group consisting of Fe, Mg, Zr, Mn, Ti, Ce, Cr, Co and Ni; and X is at least one element selected from the group consisting of Si and P (Invention 2).

Also, according to the present invention, there is provided the positive electrode active substance for non-aqueous electrolyte secondary batteries as described in the above Invention 2, wherein the polyanionic compound is a lithium compound represented by the following general formula:

$$Li_xFe_{1-y}M'_yPO_4$$

wherein x is a number of more than 0.90 and less than 1.30 $(0.90 < x < 1.30)$; y is a number of not less than 0 and less than 0.3 $(0 \leq y < 0.3)$; and M' is at least one element selected from the group consisting of Mg, Zr, Mn, Ti, Ce, Cr, Co and Ni (Invention 3).

Also, according to the present invention, there is provided the positive electrode active substance for non-aqueous electrolyte secondary batteries as described in any one of the above Inventions 1 to 3, wherein the positive electrode active substance comprises fluorine (Invention 4).

Also, according to the present invention, there is provided the positive electrode active substance for non-aqueous electrolyte secondary batteries as described in any one of the above Inventions 1 to 4, wherein the lipophilic treatment agent comprises at least one metal selected from the group consisting of Al, Ti, Zr and Si, and is in the form of a compound or a surfactant which comprises a hydrophilic functional group reactive with an inorganic material or a functional group capable of forming the hydrophilic functional group by hydrolysis thereof, and an hydrophobic organic functional group reactive with an organic material (Invention 5).

Also, according to the present invention, there is provided the positive electrode active substance for non-aqueous electrolyte secondary batteries as described in the above Invention 5, wherein the lipophilic treatment agent is selected from the group consisting of coupling agents including an aluminum-based coupling agent, a titanate-based coupling agent, a zirconate-based coupling agent and a silane-based coupling agent, silylating agents, and surfactants (Invention 6).

Also, according to the present invention, there is provided the positive electrode active substance for non-aqueous electrolyte secondary batteries as described in any one of the above Inventions 1 to 6, wherein the positive electrode active substance has a tap density of 0.5 to 3.6 g/cc (Invention 7).

Also, according to the present invention, there is provided the positive electrode active substance for non-aqueous electrolyte secondary batteries as described in any one of the above Inventions 1 to 7, wherein the positive electrode active substance has an oil absorption of not more than 20 mL/100 g (Invention 8).

Also, according to the present invention, there is provided the positive electrode active substance for non-aqueous electrolyte secondary batteries as described in any one of the above Inventions 1 to 8, wherein a total content of the carbon in the positive electrode active substance is more than 0 and not more than 15% by weight (Invention 9).

Also, according to the present invention, there is provided the positive electrode active substance for non-aqueous electrolyte secondary batteries as described in any one of the above Inventions 1 to 9, wherein an amount of the lipophilic treatment agent treated is 0.1 to 10% by weight based on the polyanionic compound (Invention 10).

Also, according to the present invention, there is provided the positive electrode active substance for non-aqueous electrolyte secondary batteries as described in any one of the above Inventions 1 to 10, wherein the particles comprising the polyanionic compound and the carbon which are respectively coated with the lipophilic treatment agent comprise a granulated product formed by bonding the particles together through the lipophilic treatment agent (Invention 11).

In addition, in accordance with the present invention, there is provided a non-aqueous electrolyte secondary battery using a positive electrode comprising the positive electrode active substance for non-aqueous electrolyte secondary batteries as described in any one of the above Inventions 1 to 11 (Invention 12).

EFFECT OF THE INVENTION

The positive electrode active substance for non-aqueous electrolyte secondary batteries according to the present invention is in the form of particles whose surface is coated with a lipophilic treatment agent although they are fine particles comprising carbon, and therefore can exhibit a good compatibility with a resin and excellent packing property and dispersibility in the resin. In addition, in the case where the positive electrode active substance for non-aqueous electrolyte secondary batteries according to the present invention comprises a granulated product formed by bonding the fine particles comprising carbon together through the lipophilic treatment agent and granulating the particles with a high packing density, it is possible to obtain an electrode sheet in which the positive electrode active substance is filled with a high packing density upon production of the electrode sheet. Therefore, the positive electrode active substance according to the present invention can be suitably used as a positive electrode active substance for non-aqueous electrolyte secondary batteries.

BRIEF DESCRIPTION OF THE DRAWINGS

FIG. 1 is an electron micrograph showing a surface of an electrode sheet produced using the positive electrode active substance obtained in Example 1.

FIG. 2 is an electron micrograph showing a section of an electrode sheet produced using the positive electrode active substance obtained in Example 1.

FIG. 3 is an electron micrograph showing a surface of an electrode sheet produced using the positive electrode active substance obtained in Comparative Example 1.

FIG. 4 is an electron micrograph showing a section of an electrode sheet produced using the positive electrode active substance obtained in Comparative Example 1.

FIG. 5 is an electron micrograph showing a section of the positive electrode active substance obtained in Example 4.

FIG. 6 is an electron micrograph showing a section of the positive electrode active substance obtained in Example 4.

FIG. 7 is an electron micrograph showing a surface of respective particles of the positive electrode active substance obtained in Example 4.

FIG. 8 is an electron micrograph showing a surface of respective particles of the positive electrode active substance obtained in Example 4.

FIG. 9 is a graph showing battery characteristics of a coin cell produced using a positive electrode active substance according to the present invention.

PREFERRED EMBODIMENT FOR CARRYING OUT THE INVENTION

The constructions of the present invention are described in detail below.

The positive electrode active substance for non-aqueous electrolyte secondary batteries according to the present invention comprises a polyanionic compound and carbon.

The polyanionic compound used in the present invention means a compound comprising a polyanion such as a phosphoric aid ion and a silicic acid ion, and is in the form of a lithium compound represented by the following general formula:

$$Li_aM_bXO_c$$

wherein M is at least one transition metal element selected from the group consisting of Fe, Co and Mn; and X is at least one element selected from the group consisting of Si and P. In addition, a part of oxygen atoms of the above compound may be substituted with fluorine (F). Examples of the polyanionic compound include $LiFePO_4$, $LiCoPO_4$, $LiMnPO_4$. $Li_2FePO_4F$, and $Li_2FeSiO_4$. Further, the M element may be substituted with at least one other element selected from the group consisting of Fe, Mg, Zr, Mn, Ti, Ce, Cr, Co and Ni.

For example, $LiFePO_4$ as one of the polyanionic compounds suitably used in the present invention may be in the form of a compound represented by the following general formula.

$$Li_xFe_{1-y}M'_yPO_4$$

wherein x is a number of more than 0.9 and less than 1.30 (0.90 < x < 1.30); y is a number of not less than 0 and less than 0.3 (0 ≤ y < 0.3); and M' is at least one element selected from the group consisting of Mg, Zr, Mn, Ti, Ce, Cr, Co and Ni.

When the number x is out of the above-specified range, it is not possible to obtain a composite oxide $LiFePO_4$ having a high battery capacity. The number x is more preferably in the range of 0.98 to 1.10 (0.98 ≤ x ≤ 1.10).

When the number y is out of the above-specified range, the resulting secondary battery tends to be considerably deteriorated in initial charge and discharge capacities.

The substituent element M' is more preferably at least one element selected from the group consisting of Mg, Zr, Mn, Ti, Ce and Co. The amount of the substituent element M' is more preferably in the range of more than 0.001 and not more than 0.25 (0.001 < y ≤ 0.25), and still more preferably 0.005 to 0.20 (0.005 ≤ y ≤ 0.20).

The crystallite size of the polyanionic compound used in the positive electrode active substance according to the present invention is preferably 1 to 1000 nm. When the crystallite size of the polyanionic compound is more than 1000 nm, the resulting secondary battery tends to be reduced in charge and discharge capacities under high charge and discharge rate conditions. The crystallite size of the polyanionic compound is more preferably 20 to 200 nm.

The polyanionic compound used in the positive electrode active substance according to the present invention may also comprise a low-electric resistance material such as carbon and halogen compounds.

The positive electrode active substance according to the present invention has an average particle diameter ($D_{50}$: volume-median secondary particle diameter) of 1 to 50 $\mu$m. When the average particle diameter of the positive electrode active substance is less than 1 $\mu$m, there tend to arise the problems such as reduction in packing density of the positive electrode active substance and increase in reactivity of the positive electrode active substance with an electrolyte solution. When the average particle diameter of the positive electrode active substance is more than 50 $\mu$m, the positive electrode active substance tends to be deteriorated in dispersibility in a resin upon forming an electrode therefrom. The average particle diameter of the positive electrode active substance is preferably 1 to 40 $\mu$m, more preferably 1 to 30 $\mu$m and still more preferably 1 to 20 $\mu$m.

When the positive electrode active substance according to the present invention comprises a granulated product formed by bonding the particles comprising the polyanionic compound and carbon together through the lipophilic treatment agent with which the respective particles are coated, the average particle diameter ($D_{50}$: volume-median secondary particle diameter) of the positive electrode active substance according to the present invention is 10 to 50 $\mu$m, preferably 10 to 40 $\mu$m and more preferably 10 to 30 $\mu$m. That is, the upper limit of the average particle diameter of the positive electrode active substance according to the present invention is 50 $\mu$m irrespective of whether or not the positive electrode active substance comprises the granulated product.

The content of carbon in the positive electrode active substance according to the present invention is more than 0% by weight and not more than 15% by weight. When the positive electrode active substance comprises no carbon, the resulting positive electrode active substance tends to be insufficient in electrical conductivity. When the content of carbon in the positive electrode active substance is more than 15% by weight, the resulting positive electrode active substance tends to be insufficient in packing property and dispersibility in a resin. The content of carbon in the positive electrode active substance is preferably 1 to 10% by weight.

The carbon to be included in the positive electrode active substance according to the present invention may be either coated on the surface of the positive electrode active substance, or encapsulated inside of respective particles of the positive electrode active substance.

The positive electrode active substance according to the present invention comprises the particles comprising the polyanionic compound and the carbon, and the lipophilic treatment agent with which the respective particles are coated, and preferably comprises the carbon-coated polyanionic compound particles whose surface is further coated the lipophilic treatment agent.

The positive electrode active substance according to the present invention preferably comprises not only the particles comprising the polyanionic compound and carbon which are respectively coated with the lipophilic treatment agent, but also the granulated product formed by bonding the above particles together through the lipophilic treatment agent with which the respective particles are coated, and more preferably comprises not only the carbon-coated polyanionic compound particles whose surface is further coated with the lipophilic treatment agent, but also the granulated product formed by bonding the coated particles together through the lipophilic treatment agent with which the respective particles are coated.

The positive electrode active substance according to the present invention preferably has a tap density of 0.5 to 3.6 g/cc. When the tap density of the positive electrode active substance is less than 0.5 g/cc, it may be difficult to increase an amount of the positive electrode active substance filled in a resin when forming an electrode sheet from the positive electrode active substance. The tap density of the positive electrode active substance is more preferably 0.7 to 3.5 g/cc.

The positive electrode active substance according to the present invention preferably has an oil absorption of not more than 20 mL/100 g. When the oil absorption of the positive electrode active substance is more than 20 mL/100 g, the positive electrode active substance tends to exhibit a poor compatibility with a resin and therefore tends to be insufficient in packing property therein. The oil absorption of the positive electrode active substance is more preferably 10 to 20 mL/100 g.

Next, the process for producing the positive electrode active substance according to the present invention is described.

The positive electrode active substance according to the present invention may be obtained by forming a composite material of the polyanionic compound and the lipophilic treatment agent.

The polyanionic compound used in the present invention is not particularly limited as long as the compound may be produced by an ordinary method. For example, $LiFePO_4$ as one of the polyanionic compounds may be produced by either the method of mixing a lithium compound, an iron compound and a phosphorus compound and baking the resulting mixture, the method of mixing an iron compound, a lithium phosphate compound and a reducing compound and baking the resulting mixture, or the like.

As the lipophilic treatment agent, there may be used a compound or a surfactant which comprises a metal (selected from the group consisting of Al, Ti, Zr and Si), and has a hydrophilic functional group reactive with an inorganic material or a functional group capable of forming the hydrophilic functional group by hydrolysis thereof, and an hydrophobic organic functional group reactive with an organic material. Specific examples of the lipophilic treatment agent include coupling agents such as an aluminum-based coupling agent, a titanate-based coupling agent, a zirconate-based coupling agent and a silane-based coupling agent, silylating agents and surfactants. Among these lipophilic treatment agents, especially preferred are coupling agents such as an aluminum-based coupling agent, a silane-based coupling agent and a titanate-based coupling agent.

Specific examples of the aluminum-based coupling agent include acetalkoxy aluminum diisopropylate, aluminum diisopropoxy monoethyl acetoacetate, aluminum trisethyl acetoacetate, and aluminum trisacetyl acetonate.

Specific examples of the titanate-based coupling agent include isopropyl triisostearoyl titanate, isopropyl tridodecylbenzenesulfonyl titanate, isopropyl tris(dioctyl pyrophosphate)titanate, bis(dioctyl pyrophosphate)oxyacetate titanate, and bis(dioctyl pyrophosphate)ethylene titanate.

Specific examples of the zirconate-based coupling agent include zirconium tetrakis(acetyl acetonate), zirconium dibutoxy bis(acetyl acetonate), zirconium tetrakis(ethyl acetoacetate), zirconium tributoxymonoethyl acetoacetate, and zirconium tributoxy acetyl acetonate.

Specific examples of the silane-based coupling agent include N-β(aminoethyl) γ-aminopropyl trimethoxysilane, N-β(aminoethyl) γ-aminopropyl methyl dimethoxysilane, γ-aminopropyl triethoxysilane, N-phenyl-γ-aminopropyl trimethoxysilane, γ-glycidoxypropylmethyl diethoxysilane, β-(3,4-epoxycyclohexyl)ethyl trimethoxysilane, vinyl trichlorosilane, vinyl triethoxysilane, and vinyl tris(β-methoxyethoxy)silane.

Specific examples of the silylating agent include hexamethyl disilazane, trialkyl alkoxysilanes, and trimethyl ethoxysilane. Specific examples of the silicone oil include dimethyl silicone oil and methyl hydrogen silicone oil.

As the surfactant, there may be used commercially available surfactants. Among these surfactants, preferred are those surfactants having a functional group capable of bonding to a hydroxyl group being present in the polyanionic compound or on the surface of the respective particles. The ionicity of the of the surfactant is preferably either cationic or anionic. Specific examples of the surfactant include polyvinyl alcohol and trioctyl amine oleic acid salts.

The lipophilic treatment agent is preferably treated in an amount of 0.1 to 10% by weight and more preferably 0.7 to 5% by weight based on the polyanionic compound. When the amount of the lipophilic treatment agent treated is too large, the bonding force between the particles through the lipophilic treatment agent tends to become too strong. When the amount of the lipophilic treatment agent treated is too small, the effect of forming a coating layer on the surface of the respective particles tends to be insufficient. In particular, when the granulated product is to be formed, the amount of the lipophilic treatment agent treated is still more preferably 0.7 to 3% by weight.

As the method of forming a composite material of the polyanionic compound and the lipophilic treatment agent, there may be used the methods of obtaining the composite material using a treating apparatus such as an edge runner (similar in meaning to "mix muller", "Simpson mill" and "sand mill"), a multimill, a Stotz mill, a Wet pan mill, a corner mill, a ring muller or the like. In addition to these treating apparatuses, the stirring for obtaining the composite material may also be conducted using the other treating apparatuses having a so-called agitating function such as a high-speed mixer (manufactured by Fukae Powtech Corp.), a Henschel mixer (Mitsui Miike Machinery Co., Ltd.), a CF granulator (manufactured by Freund Sangyo Co., Ltd.), a vertical granulator (manufactured by Powrex Corp.), a flow-jet granulator (Okawara Corp.), a universal stirrer (manufactured by Dalton Co., Ltd.), a Nauter mixer (manufactured by Hosokawa Micron Corp.), or the like.

When the particles comprising the polyanionic compound and carbon are coated with the lipophilic treatment agent, the particles comprising the polyanionic compound and carbon, and the lipophilic treatment agent may be mixed with each other using the above-mentioned treating apparatuses to obtain a composite material thereof.

Also, when obtaining the positive electrode active substance comprising the granulated product formed by bonding the particles comprising the polyanionic compound and carbon together through the lipophilic treatment agent with which the respective particles are coated, the respective components are preferably subjected to compaction treatment using a treating apparatus having a pressurization function such that the granulation is carried out simultaneously with formation of the composite material of the polyanionic compound and the lipophilic treatment agent.

In particular, when obtaining the granulated product, the coating treatment with the lipophilic treatment agent is preferably conducted under application of a higher load. For example, when the coating treatment is singly carried out using a mix muller as described below, the load applied is preferably 10 to 40 kg/cm. Further, when the granulation is to be carried out in addition to the coating treatment, the load applied is preferably increased to 30 to 60 kg/cm and more preferably 40 to 60 kg/cm.

In addition, the composite material of the polyanionic compound and the lipophilic treatment agent may be first produced, followed by further adding the lipophilic treatment agent to the resulting composite material to conduct granulation thereof. More specifically, the particles comprising the polyanionic compound and carbon are treated together with the lipophilic treatment agent using the above treating apparatus to obtain composite particles thereof, and then the lipophilic treatment agent is further added to the thus obtained composite particles to subject the resulting mixture to compaction treatment using the treating apparatus having a pressurization function, whereby it is possible to obtain a positive electrode active substance comprising the granulated product formed by bonding the particles comprising the polyanionic compound and carbon which are respectively coated with the lipophilic treatment agent, to each other through the lipophilic treatment agent. In this case, the former lipophilic treatment agent used for coating the particles comprising the polyanionic compound and carbon may be the same as or different from the latter lipophilic treatment agent used upon granulating the particles comprising the polyanionic compound and carbon which are coated with the former lipophilic treatment agent.

When obtaining the positive electrode active substance comprising the granulated product formed by bonding the particles comprising the polyanionic compound and carbon to each other through the lipophilic treatment agent with which the respective particles are coated, in order to strengthen the bonding between the particles through the lipophilic treatment agent, the resulting granulated product is preferably further subjected to heat treatment or drying treatment. The heat treatment or drying treatment is preferably conducted at a temperature of not lower than 80°C in an inert gas atmosphere such as nitrogen or argon or under a vacuum condition. The treatment temperature is more preferably not lower than 80°C and not higher than 200°C and in such a range that the lipophilic treatment agent is free from decomposition thereof.

In addition, the positive electrode active substance according to the present invention may be subjected to fluorine treatment with a fluorine gas. The thus treated fluorine may be present in the form of a fluorine compound on the surface of the respective positive electrode active substance particles, or may be used for substituting a part of oxygen atoms in the polyanionic compound therewith. The fluorine is preferably reacted with a metal element derived from the lipophilic treatment agent being present on the surface of the respective positive electrode active substance particles to form a fluorine compound.

Next, a positive electrode produced using the positive electrode active substance according to the present invention is described.

When producing the positive electrode using the positive electrode active substance according to the present invention, a conducting agent and a binder are added to and mixed with the positive electrode active substance by an ordinary method. Examples of the suitable conducting agent include acetylene black, carbon black and graphite. Examples of the suitable binder include polytetrafluoroethylene and polyvinylidene fluoride.

The positive electrode produced using the positive electrode active substance according to the present invention preferably has an electrode density of not less than 1.8 g/cm$^3$.

The secondary battery produced by using the positive electrode active substance according to the present invention comprises the above positive electrode, a negative electrode and an electrolyte.

Examples of a negative electrode active substance which may be used to produce the negative electrode include metallic lithium, lithium/aluminum alloy, lithium/tin alloy, and graphite or black lead.

Also, as a solvent for the electrolyte solution, there may be used combination of ethylene carbonate and diethyl carbonate, as well as an organic solvent comprising at least one compound selected from the group consisting of carbonates such as propylene carbonate and dimethyl carbonate, and ethers such as dimethoxyethane.

Further, as the electrolyte, there may be used a solution prepared by dissolving, in addition to lithium phosphate hexafluoride, at least one lithium salt selected from the group consisting of lithium perchlorate and lithium borate tetrafluoride in the above solvent.

EXAMPLES

The present invention is described in more detail by the following Examples. However, the following Examples are only illustrative and therefore not intended to limit the present invention thereto. The evaluation methods used in the present invention are as follows.

The average particle diameter ($D_{50}$: volume-median secondary particle diameter) of the positive electrode active substance was measured using a particle size distribution meter "MICROTRAC HRA-9320 Model" manufactured by Nikkiso Co., Ltd.

The amount of carbon was measured using a carbon/sulfur analyzer "EMIA-520FA" (manufactured by Horiba Seisakusho Co., Ltd.).

The tap density was measured using a tap denser "KYT-3000" manufactured by Seishin Kigyo Co., Ltd.

The oil absorption was measured as follows. That is, according to JIS K5101-13-2:2004, a sample was dropped into linseed oil, and kneaded by a spatula. The time at which the kneaded material was formed into one mass was regarded as a terminal point, and the oil absorption of the sample at the terminal point was measured.

The electrode density was measured as follows. That is, an electrode sheet prepared under the following sheet-forming conditions was blanked into 16 mm$\phi$. The electrode density was calculated by dividing the value obtained by subtracting a weight of an aluminum foil from a weight of the above blanked sheet by a volume obtained by multiplying an area of the blanked sheet by the value obtained by subtracting a thickness of the aluminum foil from a thickness of the blanked sheet according to the following calculation formula:

$$\texttt{Electrode density (g/cm}^3\texttt{) = [(weight of blanked sheet)}$$

$$\texttt{- (weight of aluminum foil)]/(area of blanked sheet) x}$$

$$\texttt{[(thickness of blanked sheet) - (thickness of aluminum}$$

$$\texttt{foil)]}$$

<Electrode sheet-forming test conditions>

Using the respective positive electrode active substances obtained in Examples according to the present invention, an electrode slurry comprising the active substance, acetylene black and PVdF at a mixing ratio of 9:1:1 (wt%) was prepared, and applied on an Al foil current collector using a doctor blade with a gap of 150 $\mu$m. The resulting sheet was dried and pressed under a pressure of 3 t/cm$^2$, and then the surface of the obtained sheet was visually observed to evaluate surface conditions of the sheet according to the following two ratings.

Good: No unevenness of coating on a surface of the sheet was recognized.
Poor: Unevenness of coating on a surface of the sheet was recognized.

The coin cell of a CR2032 type was produced using the electrode sheet comprising the positive electrode active substance according to the present invention, and evaluated for secondary battery characteristics thereof.

The coin cell of a CR2032 type (manufactured by Hosen Corp.) was produced by using a positive electrode sheet obtained by blanking a positive electrode sheet material into 2 cm$^2$, a 0.15 mm-thick Li negative electrode obtained by blanking a negative electrode sheet material into 17 mm$\phi$, a separator ("Cell Guard #2400") obtained by blanking a separator sheet material into 19 mm$\phi$, and an electrolyte solution (produced by Kishida Chemical Co., Ltd.) prepared by mixing EC and DEC at a volume ratio of 3:7 in which 1 mol/L of $LiPF_6$ was dissolved.

The measurement of the discharge capacity per unit volume was carried out by subjecting the cell to charging at 0.1C and then to discharging at 0.1C, 1C, 2C and 5C in the range of 2.0 to 4.1 V.

Comparative Example 1:

A 1-L cylindrical polymer bottle was charged with 88 g of $\alpha$-FeOOH, 40 g of lithium hydroxide monohydrate, 110 g of phosphoric acid and 5 g of polyvinyl alcohol, and then the contents of the polymer bottle were mixed and deaggregated using 5-mm Zr balls. The thus obtained slurry was dried, and the resulting dried product was pulverized until the particles having an average particle diameter (D50) of not more than 2 $\mu$m were obtained. The thus obtained particles were baked in a reducing atmosphere ($N_2$) at 650°C for 2 hr, thereby obtaining $LiFePO_4$ particles. The thus obtained positive electrode active substance was used to produce an electrode sheet.

Comparative Example 2:

An electrode sheet was produced using $LiFePO_4$ particles having properties as shown in Table 1.

Example 1:

A mix muller was charged with 1.5 kg of the $LiFePO_4$ particles obtained in Comparative Example 1 and 4% by mass of an epoxy group-containing aluminum coupling agent ("PLAINACT" produced by Ajinomoto Fine-Tech Co., Inc.), and the contents of the mix muller were mixed for 1 hr to subject the particles to a lipophilic treatment, thereby obtaining surface-treated $LiFePO_4$ particles. The thus obtained positive electrode active substance was used to produce an electrode sheet.

Example 2:

The same procedure as defined in Example 1 was conducted except that an epoxy group-containing silane coupling agent "KBM-403" produced by Shin-Etsu Chemical Co., Ltd., was used as the surface treatment agent, thereby obtaining surface-treated $LiFePO_4$ particles. The thus obtained positive electrode active substance was used to produce an electrode sheet.

Example 3:

A nickel reaction vessel was charged with the surface-treated $LiFePO_4$ particles obtained in Example 1, and an inside of the reaction vessel was purged with $N_2$. Successively, while flowing a $F_2$ gas and a $N_2$ gas through the reaction vessel, the contents of the reaction vessel were reacted and subjected to fluorine treatment, thereby obtaining a positive electrode active substance comprising the fluorine-treated $LiFePO_4$ particles.

Various properties of the positive electrode active substances and electrode sheets obtained in Examples 1 to 3 and Comparative Example 1 and 2 are shown in Table 1. From Table 1, it was confirmed that in the electrode sheets produced using the positive electrode active substances obtained in Examples according to the present invention, the respective active substances were filled therein with a high packing density.

## Table 1

| Examples and Comp. Examples | Average particle diameter | Carbon content | Tap density | Oil absorption |
|---|---|---|---|---|
| | (D50: $\mu$m) | (wt%) | (g/mL) | (mL/100g) |
| Example 1 | 1.8 | 2.2 | 1.21 | 15 |
| Example 2 | 1.8 | 2.1 | 1.22 | 15 |
| Example 3 | 1.8 | 2.2 | 1.21 | 15 |
| Comp. Example 1 | 1.8 | 2.0 | 1.20 | 30 |
| Comp. Example 2 | 1.1 | 2.3 | 0.57 | 25 |

## Table 1 (continued)

| Examples and Comp. Examples | Electrode density | Electric resistance | Surface condition of |
|---|---|---|---|
| | ($g/cm^3$) | ($\Omega \cdot cm$) | sheet |
| Example 1 | 1.88 | $7 \times 10^5$ | Good |
| Example 2 | 1.87 | $7 \times 10^5$ | Good |
| Example 3 | 1.88 | $4 \times 10^3$ | Good |
| Comp. Example 1 | 1.62 | $7 \times 10^5$ | Good |
| Comp. Example 2 | 1.70 | $2.2 \times 10$ | Good |

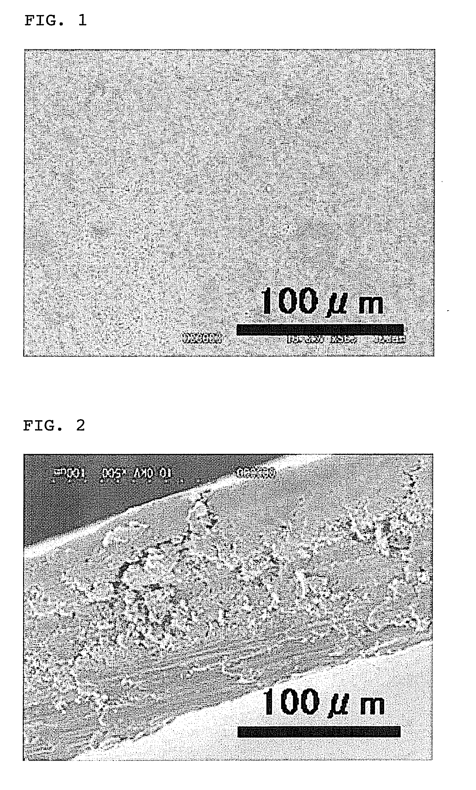

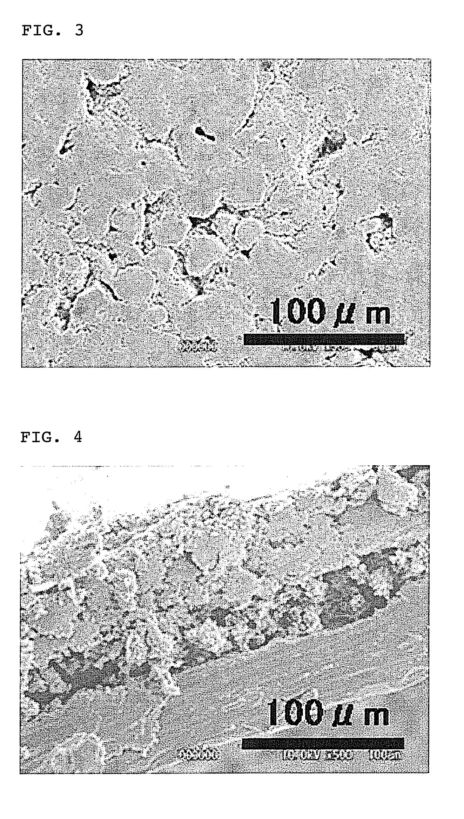

An electron micrograph of a surface of the electrode sheet produced using the positive electrode active substance obtained in Example 1 and an electron micrograph of a section of the electrode sheet are shown in FIG. 1 and FIG. 2, respectively. In addition, an electron micrograph of a surface of the electrode sheet produced using the positive electrode active substance obtained in Comparative Example 1 and an electron micrograph of a section of the electrode sheet are shown in FIG. 3 and FIG. 4, respectively. As shown in these figures, it was confirmed that the electrode sheet produced using the positive electrode active substance obtained in Example 1 was excellent in packing density of the active substance therein.

Example 4:

A mix muller was charged with 1 kg of the $LiFePO_4$ particles obtained in Comparative Example 2 and 1% by mass of an epoxy group-containing aluminum coupling agent ("PLAINACT" produced by Ajinomoto Fine-Tech Co., Inc.), and the contents of the mix muller were mixed at 27 Hz and 53 kg/cm for 3 hr and subjected to lipophilic treatment and then to compaction treatment. The sample obtained after the compaction treatment was further subjected to heat treatment in a nitrogen gas atmosphere flowing at a rate of 1 L/min at 200°C for 1 hr, thereby obtaining a positive electrode active substance comprising surface-treated $LiFePO_4$ particles.

Example 5:

The same procedure as defined in Example 4 was conducted except that the lipophilic treatment agent was added in an amount of 3% by mass, thereby obtaining a positive electrode active substance comprising surface-treated $LiFePO_4$ particles. The thus obtained positive electrode active substance was used to produce an electrode sheet.

Example 6:

The same procedure as defined in Example 4 was conducted except that the $LiFePO_4$ particles obtained in Comparative Example 1 were used, thereby obtaining a positive electrode active substance comprising surface-treated $LiFePO_4$ particles. The thus obtained positive electrode active substance was used to produce an electrode sheet.
Various properties of the positive electrode active substances and the electrode sheets obtained in Examples 4 to 6 are shown in Table 2. From Table 2, it was confirmed that in the electrode sheets produced using the positive electrode active substances comprising the granulated product formed by bonding and granulating the particles comprising the polyanionic compound and carbon together through the lipophilic treatment agent according to the present invention, the respective active substances were filled therein with a higher packing density.
### Table 2

| Examples | Average particle diameter | Carbon content | Tap density | Oil absorption |
|---|---|---|---|---|
| | (D50: $\mu$m) | (wt%) | (g/mL) | (mL/100g) |
| Example 4 | 17.4 | 2.7 | 1.46 | 14 |
| Example 5 | 29.1 | 3.7 | 1.49 | 12 |
| Example 6 | 10.9 | 2.7 | 1.55 | 19 |

### Table 2 (continued)

| Examples | Electrode density | Electric resistance | Surface condition of sheet |
|---|---|---|---|
| | (g/cm$^3$) | ($\Omega \cdot$cm) | |
| Example 4 | 2.00 | $5 \times 10^5$ | Good |
| Example 5 | 2.00 | $6 \times 10^5$ | Good |
| Example 6 | 1.98 | $6 \times 10^9$ | Good |

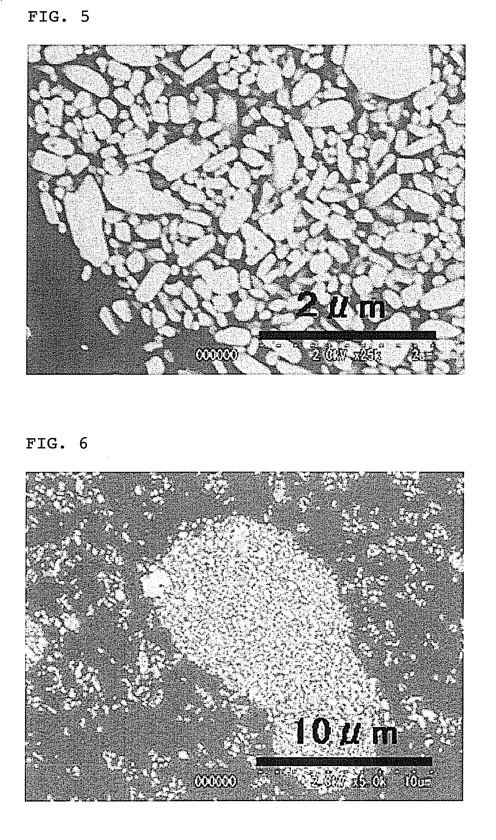

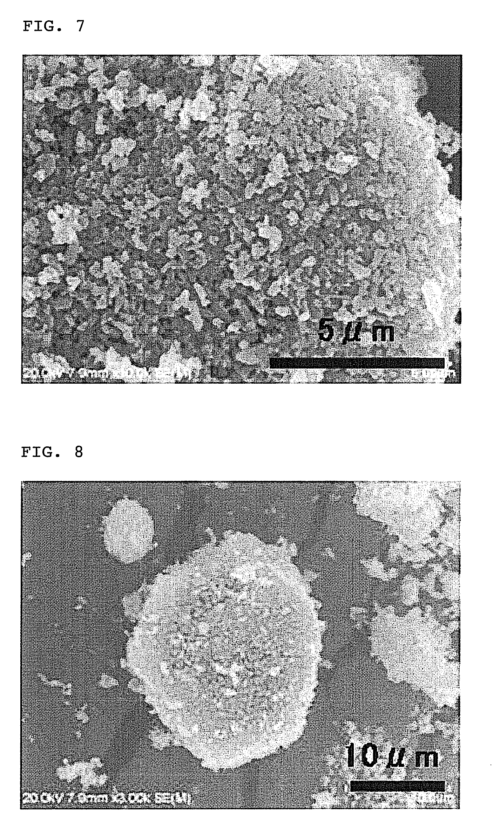

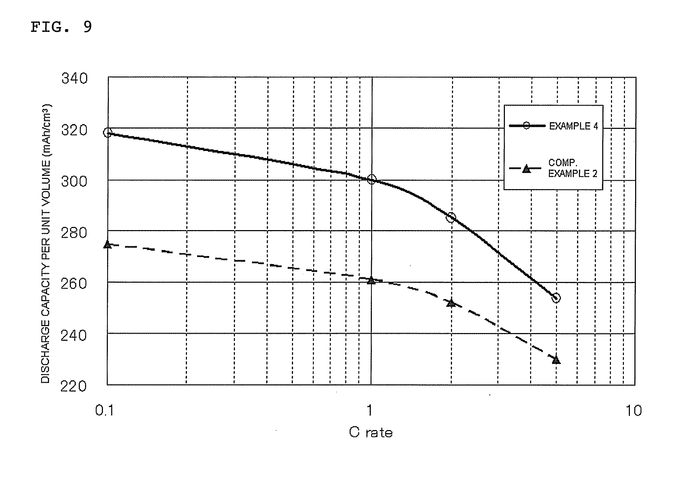

Electron micrographs of a section of the positive electrode active substance obtained in Example 4 are shown in FIGS. 5 and 6. In addition, an electron micrograph of a surface of the positive electrode active substance particle and an electron micrograph of a whole portion of the particle are shown in FIG. 7 and FIG. 8, respectively. As shown in FIGS. 5 to 8, it was confirmed that the fine particles were bonded together to form the granulated product.
In addition, as shown in FIG. 9, it was confirmed that the battery produced using the electrode sheet comprising the positive electrode active substance obtained in Example 4 which was bonded through the lipophilic treatment agent and granulated with a high packing density was excellent in capacity per unit volume as compared to the battery produced using the electrode sheet comprising the positive electrode active substance obtained in Comparative Example 2 which was subjected to no lipophilic treatment.

INDUSTRIAL APPLICABILITY

The positive electrode active substance for non-aqueous electrolyte secondary batteries according to the present invention is in the form of particles whose surface is coated with a lipophilic treatment agent although they are fine particles comprising carbon, and therefore can exhibit a good compatibility with a resin and excellent packing property and dispersibility in the resin. In addition, the positive electrode active substance for non-aqueous electrolyte secondary batteries according to the present invention comprises a granulated product formed by bonding the fine particles comprising carbon through the lipophilic treatment agent and granulating the particles with a high packing density. For this reason, it is possible to obtain an electrode sheet in which the positive electrode active substance is filled with a high packing density upon production of the electrode sheet. Therefore, the positive electrode active substance according to the present invention can be suitably used as a positive electrode active substance for non-aqueous electrolyte secondary batteries.

**Claims**

1. A positive electrode active substance for non-aqueous electrolyte secondary batteries, comprising particles which comprise a polyanionic compound and carbon, which are respectively coated with a lipophilic treatment agent, and which has an average particle diameter of 1 to 50 $\mu$m.

2. A positive electrode active substance for non-aqueous electrolyte secondary batteries according to claim 1, wherein the polyanionic compound is a lithium compound represented by the following general formula:

$$Li_aM_bXO_c$$

wherein M is at least one transition metal element selected from the group consisting of Fe, Co and Mn and may be substituted with at least one other element selected from the group consisting of Fe, Mg, Zr, Mn, Ti, Ce, Cr, Co and Ni; and X is at least one element selected from the group consisting of Si and P.

3. A positive electrode active substance for non-aqueous electrolyte secondary batteries according to claim 2, wherein the polyanionic compound is a lithium compound represented by the following general formula:

$$Li_xFe_{1-y}M'_yPO_4$$

wherein x is a number of more than 0.90 and less than 1.30 (0.90 < x < 1.30); y is a number of not less than 0 and less than 0.3 (0 ≤ y < 0.3); and M' is at least one element selected from the group consisting of Mg, Zr, Mn, Ti, Ce, Cr, Co and Ni.

4. A positive electrode active substance for non-aqueous electrolyte secondary batteries according to any one of claims 1 to 3, wherein the positive electrode active substance comprises fluorine.

5. A positive electrode active substance for non-aqueous electrolyte secondary batteries according to any one of claims 1 to 4, wherein the lipophilic treatment agent comprises at least one metal selected from the group consisting of Al, Ti, Zr and Si, and is in the form of a compound or a surfactant which comprises a hydrophilic functional group reactive with an inorganic material or a functional group capable of forming the hydrophilic functional group by hydrolysis thereof, and an hydrophobic organic functional group reactive with an organic material.

6. A positive electrode active substance for non-aqueous electrolyte secondary batteries according to claim 5, wherein the lipophilic treatment agent is selected from the group consisting of coupling agents including an aluminum-based coupling agent, a titanate-based coupling agent, a zirconate-based coupling agent and a silane-based coupling agent, silylating agents, and surfactants.

7. A positive electrode active substance for non-aqueous electrolyte secondary batteries according to any one of claims 1 to 6, wherein the positive electrode active substance has a tap density of 0.5 to 3.6 g/cc.

8. A positive electrode active substance for non-aqueous electrolyte secondary batteries according to any one of claims 1 to 7, wherein the positive electrode active substance has an oil absorption of not more than 20 mL/100 g.

9. A positive electrode active substance for non-aqueous electrolyte secondary batteries according to any one of claims 1 to 8, wherein a total content of the carbon in the positive electrode active substance is more than 0 and not more than 15% by weight.

10. A positive electrode active substance for non-aqueous electrolyte secondary batteries according to any one of claims 1 to 9, wherein an amount of the lipophilic treatment agent treated is 0.1 to 10% by weight based on the polyanionic compound.

11. A positive electrode active substance for non-aqueous electrolyte secondary batteries according to any one of claims 1 to 10, wherein the particles comprising the polyanionic compound and the carbon which are respectively coated with the lipophilic treatment agent comprise a granulated product formed by bonding the particles together through the lipophilic treatment agent.

12. A non-aqueous electrolyte secondary battery using a positive electrode comprising the positive electrode active substance for non-aqueous electrolyte secondary batteries as defined in any one of claims 1 to 11.

FIG. 1

100 μm

FIG. 2

100 μm

FIG. 3

FIG. 4

FIG. 5

FIG. 6

FIG. 7

FIG. 8

FIG. 9

<table>
<tr><td colspan="2" align="center">**INTERNATIONAL SEARCH REPORT**</td><td colspan="2">International application No.<br>PCT/JP2010/062591</td></tr>
<tr><td colspan="4">A.   CLASSIFICATION OF SUBJECT MATTER<br>*H01M4/58*(2010.01)i, *H01M4/36*(2006.01)i<br><br><br>According to International Patent Classification (IPC) or to both national classification and IPC</td></tr>
<tr><td colspan="4">B.   FIELDS SEARCHED</td></tr>
<tr><td colspan="4">Minimum documentation searched (classification system followed by classification symbols)<br>H01M4/58, H01M4/36<br><br><br></td></tr>
<tr><td colspan="4">Documentation searched other than minimum documentation to the extent that such documents are included in the fields searched<br>   Jitsuyo Shinan Koho        1922–1996   Jitsuyo Shinan Toroku Koho   1996–2010<br>   Kokai Jitsuyo Shinan Koho   1971–2010   Toroku Jitsuyo Shinan Koho   1994–2010</td></tr>
<tr><td colspan="4">Electronic data base consulted during the international search (name of data base and, where practicable, search terms used)<br><br><br></td></tr>
<tr><td colspan="4">C.   DOCUMENTS CONSIDERED TO BE RELEVANT</td></tr>
<tr><td>Category*</td><td colspan="2">Citation of document, with indication, where appropriate, of the relevant passages</td><td>Relevant to claim No.</td></tr>
<tr><td>P,X</td><td colspan="2">WO 2010/073634 A1  (Toda Kogyo Corp.),<br>01 July 2010 (01.07.2010),<br>abstract; claims; paragraphs [0041] to [0064];<br>examples<br>(Family: none)</td><td>1-10,12</td></tr>
<tr><td>Y</td><td colspan="2">JP 2006-107958 A  (Nippon Zeon Co., Ltd.),<br>20 April 2006 (20.04.2006),<br>abstract; claims; paragraphs [0012] to [0022];<br>examples<br>& US 2008/0096109 A1    & WO 2006/038652 A1<br>& KR 10-2007-0061580 A  & CN 101073170 A</td><td>1-10,12</td></tr>
<tr><td colspan="2">☒   Further documents are listed in the continuation of Box C.</td><td colspan="2">☐   See patent family annex.</td></tr>
<tr><td colspan="2">*   Special categories of cited documents:<br>"A"  document defining the general state of the art which is not considered<br>     to be of particular relevance<br>"E"  earlier application or patent but published on or after the international<br>     filing date<br>"L"  document which may throw doubts on priority claim(s) or which is<br>     cited to establish the publication date of another citation or other<br>     special reason (as specified)<br>"O"  document referring to an oral disclosure, use, exhibition or other means<br>"P"  document published prior to the international filing date but later than<br>     the priority date claimed</td><td colspan="2">"T"  later document published after the international filing date or priority<br>     date and not in conflict with the application but cited to understand<br>     the principle or theory underlying the invention<br>"X"  document of particular relevance; the claimed invention cannot be<br>     considered novel or cannot be considered to involve an inventive<br>     step when the document is taken alone<br>"Y"  document of particular relevance; the claimed invention cannot be<br>     considered to involve an inventive step when the document is<br>     combined with one or more other such documents, such combination<br>     being obvious to a person skilled in the art<br>"&"  document member of the same patent family</td></tr>
<tr><td colspan="2">Date of the actual completion of the international search<br>   24 September, 2010 (24.09.10)</td><td colspan="2">Date of mailing of the international search report<br>   05 October, 2010 (05.10.10)</td></tr>
<tr><td colspan="2">Name and mailing address of the ISA/<br>   Japanese Patent Office<br><br>Facsimile No.</td><td colspan="2">Authorized officer<br><br><br>Telephone No.</td></tr>
</table>

Form PCT/ISA/210 (second sheet) (July 2009)

**INTERNATIONAL SEARCH REPORT**

| International application No. |
| --- |
| PCT/JP2010/062591 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y | JP 2007-280830 A  (Matsushita Electric Industrial Co., Ltd.), 25 October 2007 (25.10.2007), claims; paragraph [0036]; examples (Family: none) | 1-10,12 |
| Y | JP 2008-21415 A  (Nissan Motor Co., Ltd.), 31 January 2008 (31.01.2008), claims; paragraph [0027] (Family: none) | 1-10,12 |
| Y | JP 2002-324551 A  (Titan Kogyo, Ltd.), 08 November 2002 (08.11.2002), claims; paragraphs [0006], [0019], [0021], [0038] (Family: none) | 1-10,12 |
| Y | JP 7-37578 A  (C. Uyemura & Co., Ltd.), 07 February 1995 (07.02.1995), abstract; claims; examples (Family: none) | 1-10,12 |
| A | JP 2008-147024 A  (Sumitomo Osaka Cement Co., Ltd.), 26 June 2008 (26.06.2008), abstract; claims; examples (Family: none) | 1-12 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003292308 A
- JP 2001015111 A
- JP 2006032241 A